# EUROPÄISCHE PATENTSCHRIFT

(11) **EP 4 517 113 B1**
(45) Veröffentlichungstag und Bekanntmachung des Hinweises auf die Patenterteilung: **22.07.2026**
(21) Anmeldenummer: 24197768.5
(22) Anmeldetag: 30.08.2024
(51) Int. Cl.: F16B 5/10, F16B 21/04, F16B 2/18

(54) **SCHNELLVERSCHLUSS-BEFESTIGUNGSEINRICHTUNG**
QUICK-RELEASE FASTENER
DISPOSITIF DE FIXATION À ACTION RAPIDE

(30) Priorität: 30.08.2023 DE 102023123377
(43) Veröffentlichungstag der Anmeldung: 05.03.2025
(73) Patentinhaber: ARX Robotics GmbH, 85445 Oberding (DE)
(72) Erfinder: RÖBEL, Stefan, 85445 (DE)
(74) Vertreter: WSL Patentanwälte Partnerschaft mbB

(56) Entgegenhaltungen:
- WO-A1-2017/194827
- US-A1- 2016 212 869

## Beschreibung

Die Erfindung betrifft eine Schnellverschluss-Befestigungseinrichtung sowie ein Roboterfahrzeug mit einer solchen Schnellverschluss-Befestigungseinrichtung.

Schnellverschluss-Befestigungseinrichtungen können Einschränkungen bei der Handhabung insbesondere bei der Positionierung von anzubringenden Lasten oder Gegenständen aufweisen. Die US 2016/212869 A1 zeigt einen Schnellverschluss mit Bajonettverriegelung. Weiterer Stand der Technik ist die Druckschrift WO 2017/194827 A1.

Aufgabe der Erfindung ist es, eine Schnellverschluss-Befestigungseinrichtung zu schaffen, die im Hinblick auf eine einfache und universelle Anbringung von Lasten oder Gegenständen verbessert ist sowie ein Roboterfahrzeug mit einer solchen verbesserten Schnellverschluss-Befestigungseinrichtung bereitzustellen.

Die Aufgabe wird erfindungsgemäß gelöst durch eine Schnellverschluss-Befestigungseinrichtung zum Anbringen von Gegenständen oder Lasten an einem Roboterfahrzeug, wobei die Schnellverschluss-Befestigungseinrichtung eine Bajonettverschlusseinheit und einen von der Bajonettverschlusseinheit verriegelbaren Adapter enthält. Der Adapter ist dafür ausgebildet, mit einem Gegenstand oder einer Last verbunden zu werden. Die Bajonettverschlusseinheit enthält eine Basisplatte, die dafür ausgebildet ist, an dem Roboterfahrzeug befestigt zu werden, eine mit der Basisplatte fest verbundene zentrale Adapteraufnahme und einen Verriegelungsring, der an der Basisplatte um eine zentrale Schnellverschluss-Drehachse verschwenkbar angeordnet ist, die Adapteraufnahme konzentrisch umgibt und einwärts gegen die zentrale Schnellverschluss-Drehachse gerichtete Verriegelungsnasen aufweist. Der Adapter enthält an seinem Umfang angeordnete Bajonettzähne, die in einer Ebene senkrecht zur Schnellverschluss-Drehachse angeordnet sind und zur drehfesten Aufnahme des Adapters auf einer zugeordneten insbesondere ringförmigen Auflagefläche der Adapteraufnahme ausgebildet sind. In einer Schließstellung der Bajonettverschlusseinheit nimmt der Verriegelungsring eine
erste Schwenkstellung oder Riegelstellung ein, in der die Verriegelungsnasen die Bajonettzähne zumindest teilweise überdecken und den Adapter an der Adapteraufnahme verriegelt halten. In einer Offenstellung der Bajonettverschlusseinheit nimmt der Verriegelungsring eine zweite Schwenkstellung oder Offenstellung ein, in der die Verriegelungsnasen die Bajonettzähne zum Entnehmen des Adapters von der Adapteraufnahme freigeben.

Die Aufgabe wird weiterhin durch ein Roboterfahrzeug mit den Merkmalen des Anspruchs 13 gelöst.

Vorteilhafte Ausgestaltungen der Erfindung sind in den abhängigen Ansprüchen angegeben.

Eine erfindungsgemäße Schnellverschluss-Befestigungseinrichtung gewährleistet das einfache und schnelle Anbringen und Verriegeln des Adapters an der Bajonettverschlusseinheit. Beim Verriegeln wird lediglich der Verriegelungsring schwenkbewegt, wohingegen der Adapter gegen eine Bewegung in Umfangrichtung blockiert ist. Ein mittels des Adapters am Roboterfahrzeug anzubringender Gegenstand behält daher beim Verriegeln seine vorgewählte Position bei.

Die Adapteraufnahme und der Adapter sind insbesondere derart gebildet, dass der Adapter in Umfangsrichtung wahlweise in unterschiedlichen Stellungen an der Adapteraufnahme einsetzbar ist. Damit ist eine freie Wahl der Drehpositionierung des Gegenstands unabhängig von der Schwenkstellung des Verriegelungsrings gegeben.

Gemäß einer bevorzugten Ausführungsform ist vorgesehen, dass die Adapteraufnahme zumindest einen Anschlag oder eine Radialrippe aufweist, der bzw. die im Eingriff an zumindest einem Bajonettzahn die Stellung des Adapters in Umfangsrichtung relativ zu der Adapteraufnahme definiert und/oder eine Schwenkbewegung des Adapters relativ zu der Adapteraufnahme begrenzt oder verhindert. Damit ist der Adapter sowohl bei der Aufnahme an der Adapteraufnahme wie auch beim Verriegeln drehfest gesichert.

Vorzugsweise ist die zumindest eine Radialrippe als Erhebung von der ringförmigen Auflagefläche gebildet. Zweckmäßigerweise ist die Auflagefläche von der zumindest einen Radialrippe in Umfangsrichtung in Teilauflageflächen unterteilt.

Zweckmäßigerweise ist die Auflagefläche eine zentrisch ausgerichtete ringförmige Fläche, die sowohl senkrecht zur Schnellverschluss-Drehachse wie auch geringfügig konisch geneigt sein kann. Die Bajonettzähne sind an ihren Unterseiten an diese Gestalt angepasst. Die Auflagefläche oder die Teilauflageflächen können auch als Ausformungen oder Vertiefungen an einem ringförmigen Auflagebereich der Adapteraufnahme gebildet sein. Ein erhöhter Übergang zwischen zwei Ausformungen oder Vertiefungen kann einen voranstehend beschriebenen Anschlag bilden.

Gemäß einer weiteren bevorzugten Ausführungsform ist vorgesehen, dass jeweils zwischen zwei Bajonettzähnen eine Aussparung gebildet ist, in die eine der Radialrippen eingreift. Die Anzahl der Radialrippen ist maximal gleich der Anzahl der Aussparungen.

Zweckmäßigerweise sind in der zweiten Schwenkstellung oder Offenstellung des Verriegelungsrings die Verriegelungsnasen über den Radialrippen angeordnet. Insbesondere reichen die Verriegelungsnasen in Umfangsrichtung nicht über die Radialrippen hinaus. Damit kann beim Einsetzen des Adapters die jeweilige Aussparung zwischen zwei Bajonettzähnen sowohl die Verriegelungsnase wie auch die Radialrippe aufnehmen.

Zweckmäßigerweise enthält der Adapter eine Einrichtung zur Schwenkbegrenzung des Verriegelungshebels in seiner ersten Schwenkstellung oder Riegelstellung. Hierdurch ist eine erleichterte Bedienung und Handhabung gewährleistet.

Ein aufwändiges manuelles Aufsuchen der korrekten Schwenkstellung ist nicht erforderlich. Vorzugsweise umfasst die Einrichtung zur Schwenkbegrenzung zumindest einen radialen Begrenzungssteg, der zweckmäßigerweise an einer Oberseite eines der Bajonettzähne angeordnet ist und einen Anschlag für eine zugeordnete Verriegelungsnase in der ersten Schwenkstellung des Verriegelungsrings bildet. Der Begrenzungssteg ist z. B. einstückig oder integral mit dem Adapter hergestellt und stützt den Bajonettzahn an einem Grundkörper des Adapters insbesondere bei auftretender Biegebelastung ab. Die Bajonettzähne sind zweckmäßigerweise für die Übertragung einer hohen Belastung ausgelegt.

Es ist vorgesehen, dass der Verriegelungsring einen Basisringabschnitt, der auf der Basisplatte der Bajonettverschlusseinheit gleitbeweglich aufliegt, und einen die Verriegelungsnasen enthaltenden Kopfring aufweist. Der Kopfring ist vorzugsweise mittels Schraubverbindungen an dem Basisringabschnitt angebracht. Damit ist er leicht austauschbar, insbesondere zum Auswechseln der Verriegelungsnasen. Auch kann eine Schraubverbindung bei der Montage der Bauteile der Bajonettverschlusseinheit zweckdienlich sein.

Der Basisringabschnitt enthält einen Lagerschenkel, der einwärts gegen die Schnellverschluss-Drehachse vorsteht und in einer ringförmigen Führungsnut schwenkbeweglich gehalten ist. Die Führungsnut ist insbesondere unterseitig von der Basisplatte und oberseitig von einer Bodenplatte der Adapteraufnahme begrenzt. Zweckmäßigerweise ist die Führungsnut von einer Umfangsausnehmung der Bodenplatte gebildet. Der Lagerschenkel kann ein Teil des Basisringabschnitts sein oder als eigenständiges Teil an dem Basisringabschnitt angebracht sein. Über den Lagerschenkel ist der Verriegelungsring radial zentriert und axial gesichert gehalten.

Gemäß einer weiteren bevorzugten Ausführungsform ist vorgesehen, dass eine Zentriereinrichtung für eine zentrierende Aufnahme des Adapters an der Adapteraufnahme einen Außenkonus an der Adapteraufnahme und einen dem Außenkonus zugeordneten Innenkonus am Adapter aufweist. Eine solche Zentriereinrichtung erleichtert und unterstützt das korrekte Zuführen des Adapters an die Adapteraufnahme sowie die korrekte zentrische Positionierung an der Adapteraufnahme.

Vorzugsweise ist zumindest ein Schwenkhebel zum Schwenkbetätigen des Verriegelungsrings am Verriegelungsring angebracht, der mittels Verschraubung oder mittels einer Steckverbindung befestigt ist. Der Schwenkhebel erleichtert die manuelle Bedienung und kann auch ein optisches Erkennen der Stellung des Verriegelungsrings unterstützen.

Zweckmäßigerweise enthält die Bajonettverschlusseinheit eine Rasteinrichtung, die den Verriegelungsring in einer definierten Schwenkstellung hält, z. B. in einer Offenstellung der Bajonettverschlusseinheit, in der der Adapter eingesetzt oder entnommen werden kann. Die Rasteinrichtung umfasst beispielsweise zumindest ein Rastelement, das in dem Verriegelungsring z. B. in einer nach unten offenen Bohrung eingesetzt ist und eine federbelastete Rastkugel in eine zugeordnete Rastvertiefung lösbar eindrückt, die in der Oberseite der Basisplatte gebildet ist.

Ein erfindungsgemäßes Roboterfahrzeug ist mit zumindest einer Schnellverschluss-Befestigungseinrichtung nach einem der Ansprüche 1 bis 12 und der voranstehenden Beschreibung gebildet. Die zumindest eine Schnellverschluss-Befestigungseinrichtung ist vorzugsweise an einer Außenseite oder einer Oberseite des Roboterfahrzeugs angeordnet. Die Außenseite oder die Oberseite ist von einem Bauteil gebildet, das die für die Anbringung eines Gegenstands oder einer Last erforderliche Festigkeit aufweist.

Die zumindest eine Schnellverschluss-Befestigungseinrichtung ist insbesondere zum Anbringen von Gegenständen oder Lasten wie Antennen, Radareinrichtungen, Lasereinrichtungen und Trageinrichtungen für Ausrüstung oder für Personen ausgebildet.

Das Roboterfahrzeug ist z. B. ein selbstfahrendes oder autonomes Fahrzeug, das z. B. für Aufklärungszwecke oder als Transportfahrzeug verwendet wird.

Nachfolgend wird eine erfindungsgemäße Schnellverschluss-Befestigungseinrichtung anhand eines Ausführungsbeispiels unter Bezugnahme auf die Zeichnung näher erläutert. Es zeigt:
Fig. 1 in einer isometrischen Ansicht eine erfindungsgemäße Schnellverschluss-Befestigungseinrichtung mit einer Bajonettverschlusseinheit und einem daran angebrachten Adapter in einer nicht verriegelten Offenstellung;
Fig. 2 in einer isometrischen Ansicht die Bajonettverschlusseinheit mit dem Adapter in Explosionsdarstellung;
Fig. 3 in einer isometrischen Ansicht die Bajonettverschlusseinheit mit dem daran angebrachten Adapter in Riegelstellung;
Fig. 4 in einer isometrischen Ansicht die Bajonettverschlusseinheit;
Fig. 5 in einer isometrischen Schnittansicht die Bajonettverschlusseinheit;

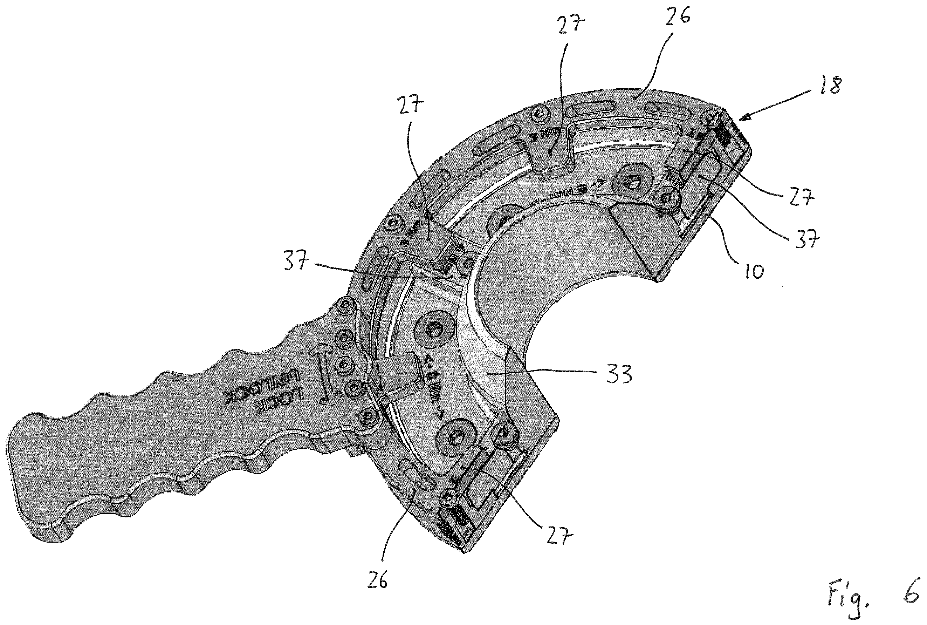

Fig. 6 in einer weiteren isometrischen Schnittansicht die Bajonettverschlusseinheit;
Fig. 7 in einer weiteren isometrischen Schnittansicht die Bajonettverschlusseinheit der Fig. 6;
Fig. 8 in einer weiteren isometrischen Schnittansicht eine Unterseite der Bajonettverschlusseinheit in Teilschnittdarstellung;
Fig. 9 in einer isometrischen Schnittansicht die Bajonettverschlusseinheit mit daran angebrachtem nicht verriegeltem Adapter in Teilschnittdarstellung;
Fig. 10 in einer isometrischen Ansicht den Adapter;

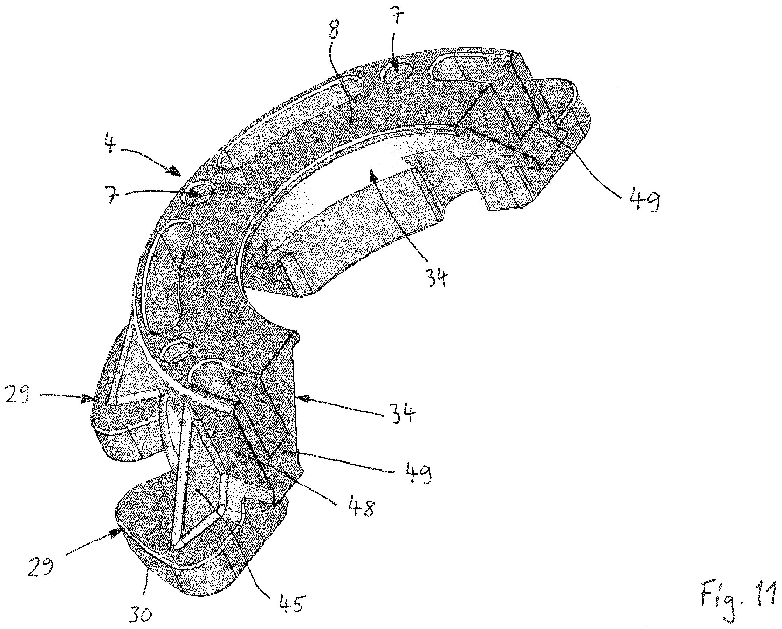

Fig. 11 in einer isometrischen Ansicht den Adapter in Schnittdarstellung;
Fig. 12 in einer isometrischen Ansicht ein erfindungsgemäßes Roboterfahrzeug mit mehreren Schnellverschluss-Befestigungseinrichtungen;
Fig. 13 in einer Seitenansicht das Roboterfahrzeug der Fig. 12;
Fig. 14 in einer Draufsicht die Oberseite des Roboterfahrzeugs der Fig. 12; und

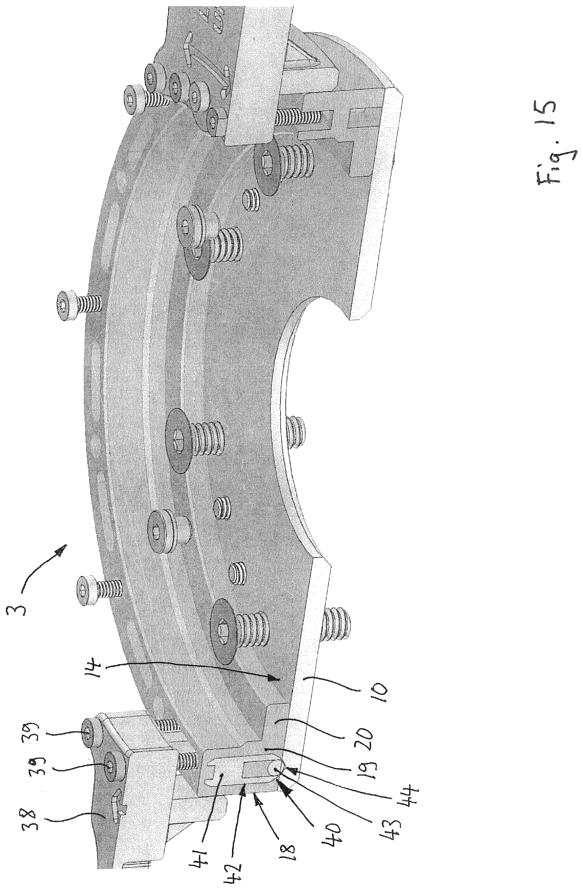

Fig. 15 in einer isometrischen Ansicht die Bajonettverschlusseinheit in Schnittdarstellung mit einer Rasteinrichtung.

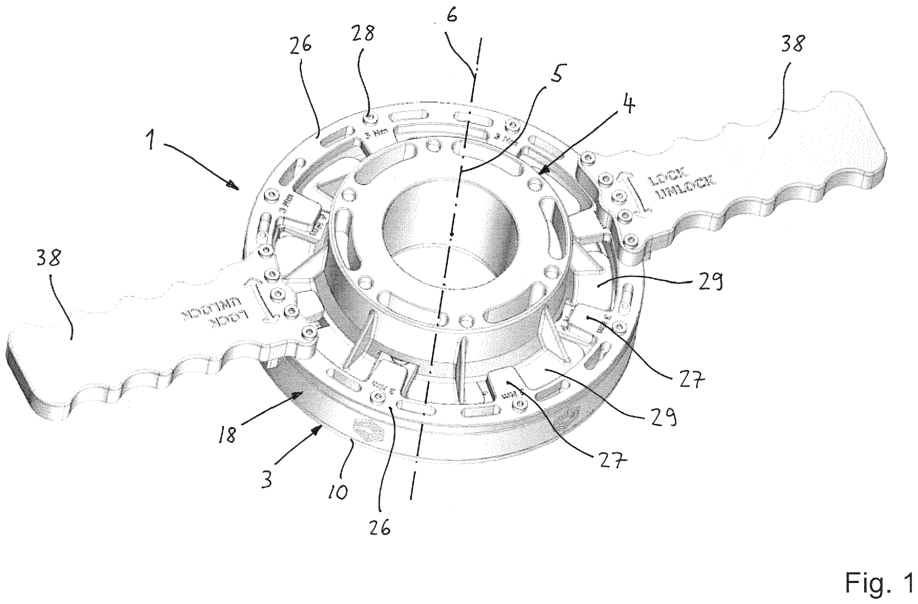

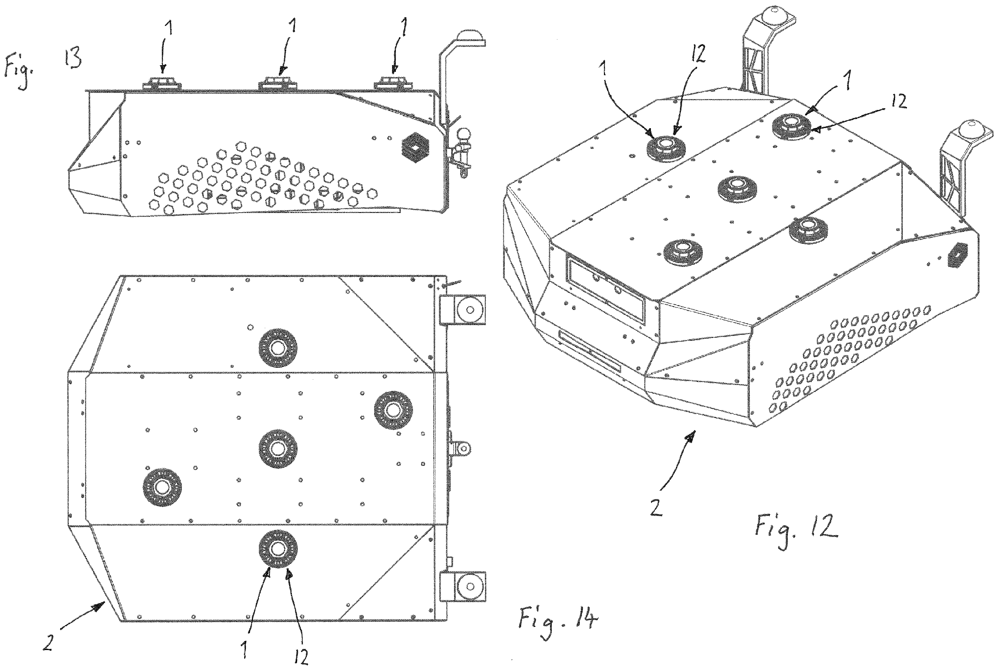

Eine Schnellverschluss-Befestigungseinrichtung 1 (Fig. 1) zum Anbringen von Gegenständen oder Lasten, insbesondere auch schweren Lasten, an einem Fahrzeug wie einem autonom fahrenden Fahrzeug oder einem Roboterfahrzeug 2 (siehe Fig. 12 bis 14) weist eine Bajonettverschlusseinheit 3 und einen Adapter 4 auf. Der Adapter 4 ist weitgehend symmetrisch zu seiner Zentralachse 5 gebildet und konzentrisch zu einer zentralen Schwenkverschluss-Drehachse 6 der Schnellverschluss-Befestigungseinrichtung 1 an der Bajonettverschlusseinheit 3 anbringbar. Der Adapter 4 ist dafür ausgebildet, dass er mit einem am Roboterfahrzeug 2 anzubringenden Gegenstand (nicht dargestellt) verbunden werden kann. Hierfür weist der Adapter 4 z. B. mehrere Durchgangsbohrungen 7 auf, die insbesondere parallel zur Zentralachse 5 und vorzugsweise auf einer zur Zentralachse 5 konzentrischen Kreislinie gebildet sind und über die ein Gegenstand z. B. mittels Verschraubungen befestigt werden kann. Der Gegenstand liegt zweckmäßigerweise an einer der Bajonettverschlusseinheit 3 abgewandten Stirnbefestigungsfläche 8 des Adapters 4 an.

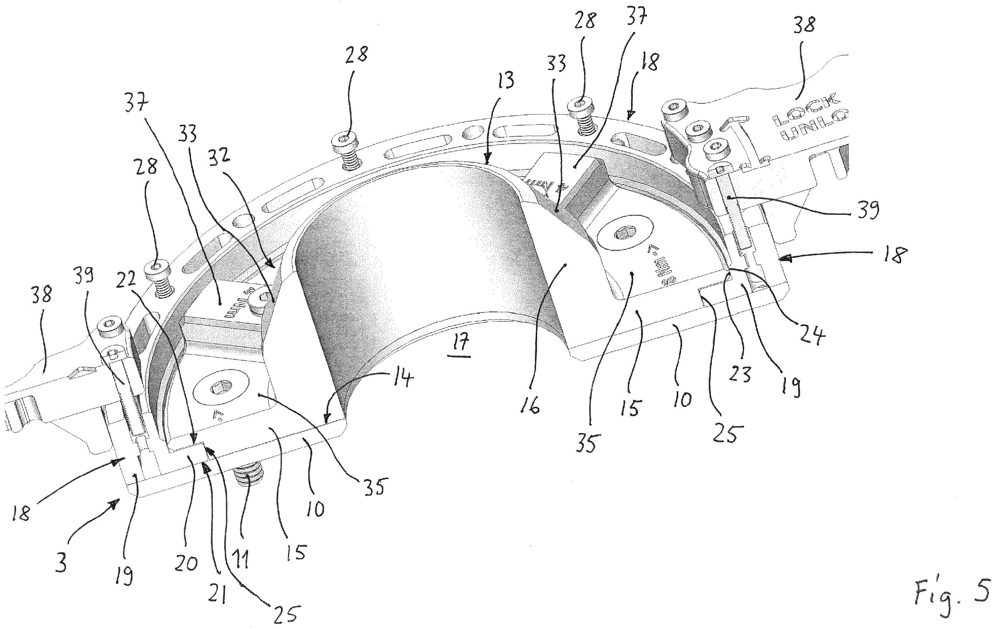

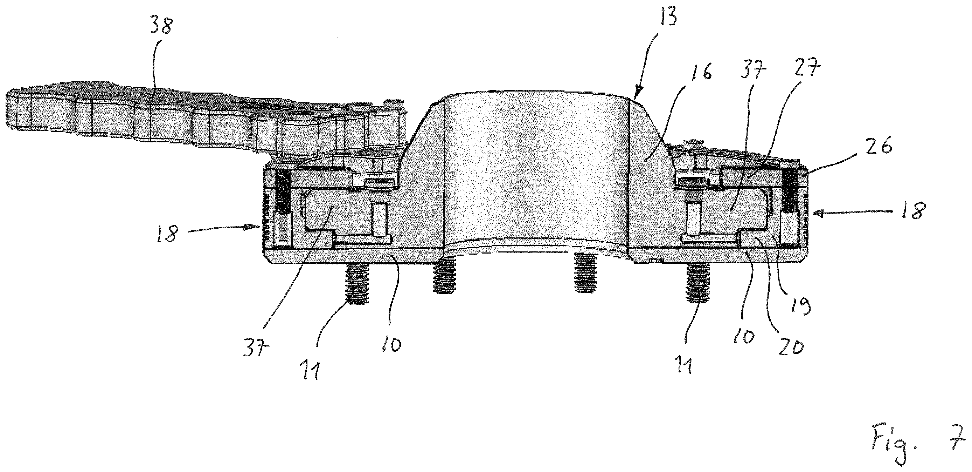

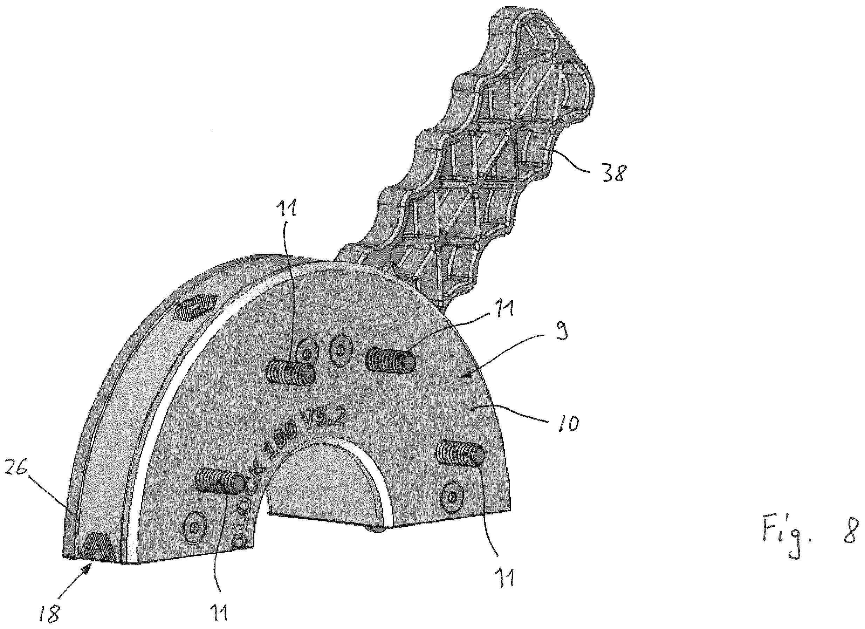

Die Bajonettverschlusseinheit 3 enthält an ihrer Unterseite 9 eine Basisplatte 10 (siehe Fig. 5, 7 und 8), über die die Schnellverschluss-Befestigungseinrichtung 1 an dem Roboterfahrzeug 2 anliegt, wenn sie z. B. mittels mehrerer Schrauben 11 an einer Befestigungsstelle 12 des Roboterfahrzeugs 2 angebracht wird.

Die Bajonettverschlusseinheit 3 enthält weiterhin eine zentrale Adapteraufnahme 13, die konzentrisch zur Schwenkverschluss-Drehachse 6 an einer Oberseite 14 der Basisplatte 10 vorzugsweise mittels einer Verschraubung angebracht ist, insbesondere mittels der Schrauben 11, die die Bajonettverschlusseinheit 3 an dem Roboterfahrzeug 2 festlegt. Die Adapteraufnahme 13 enthält eine Bodenplatte 15, die auf der Basisplatte 10 aufliegt und an dieser befestigt ist, und einen zentralen Ringabschnitt 16, der eine zentrale zylindrische Öffnung 17 aufweist.

Die Bajonettverschlusseinheit 3 enthält weiterhin einen Verriegelungsring 18 (Fig. 5), der auf der Basisplatte 10 konzentrisch zur zentralen Schnellverschluss-Drehachse 6 verschwenkbar angeordnet ist. Ein Basisringabschnitt 19 des Verriegelungsrings 18 liegt mit seiner Unterseite flächig auf der Oberseite 14 der Basisplatte 10 auf und kann in Umfangsrichtung auf der Oberseite 14 der Basisplatte 10 gleiten. Der Basisringabschnitt 19 weist einen Lagerschenkel 20 auf, der radial einwärts vorragt und in einer ringförmigen Führungsnut 21 aufgenommen ist, die von einer Umfangsausnehmung 22 in der Bodenplatte 15 der Adapteraufnahme 13 gebildet ist und unterseitig von der Basisplatte 10 begrenzt ist. Vorzugsweise kontaktiert ein Umfangsrand 23 der Bodenplatte 15 eine Innenfläche 24 des Basisringabschnitts 19 und stellt eine radiale Führung des Verriegelungsrings 18 bereit. In alternativer Gestaltung kann auch der Lagerschenkel 20 über seine Innenstirnfläche 25 die Umfangsausnehmung 22 der Bodenplatte 15 in radialer Richtung kontaktieren und die radiale Führung bereitstellen. Der Verriegelungsring 18 ist somit radial und axial im Wesentlichen spielfrei gelagert und in Umfangsrichtung verschwenkbar. Der Verriegelungsring 18 schließt an seinem Umfang bündig mit der kreisförmigen Basisplatte 10 ab.

Der Verriegelungsring 18 weist an seinem Oberabschnitt einen Kopfring 26 auf, der mehrere Verriegelungsnasen 27 enthält, die vom Kopfring 26 einwärts vorstehen und über den Umfang des Kopfrings 26 und des Verriegelungsrings 18 gleichmäßig verteilt angeordnet sind. Die Verriegelungsnasen 27 sind z. B. als zungenförmige Vorsprünge oder Platten gebildet, die in einer zur Schwenkverschluss-Drehachse 6 senkrechten Ebene und somit parallel zur Bodenplatte 10 angeordnet sind. Die dargestellte Ausführungsform weist beispielhaft acht Verriegelungsnasen 27 auf. Der Kopfring 26 ist zweckmäßigerweise mittels einer Verschraubung, die mehrere Schrauben 28 enthält, an dem Basisringabschnitt 19 befestigt.

Der Adapter 4 weist mehrere Bajonettzähne 29 auf, vorzugsweise in einer zur Anzahl der Verriegelungsnasen 27 gleichen Anzahl. Die Bajonettzähne 29 sind an einer Adapterbasis des Adapters 4 in einer zur Schnellverschluss-Drehachse 6 senkrechten Ebene und über den Umfang des Adapters 4 gleichmäßig verteilt angeordnet. Die Bajonettzähne 29 ragen mit ihrer jeweiligen Außenumfangsfläche 30 soweit radial nach außen vor, dass sie beim Einsetzen des Adapters 4 an die Adapteraufnahme 13 innerhalb des Verriegelungsrings 18 positioniert werden können. Eine die Außenumfangsflächen 30 umschreibende und zur Schnellverschluss-Drehachse 6 konzentrische Kreislinie hat somit einen Durchmesser, der kleiner ist als der Innendurchmesser des Basisringabschnitts 19 des Verriegelungsrings 18. Jeweils zwei benachbarte Bajonettzähne 29 sind über eine Aussparung 31 voneinander getrennt. Jede Aussparung 31 ist derart geformt, dass beim Einsetzen des Adapters 4 an die Adapteraufnahme 13 eine zugeordnete Verriegelungsnase 27 durch die Aussparung 31 hindurch bewegt werden kann, wenn die Bajonettzähne 29 an den Verriegelungsnasen 27 vorbei geführt werden.

Die Schnellverschluss-Befestigungseinrichtung 1 enthält eine Zentriereinrichtung 32 für eine bezüglich der Schnellverschluss-Drehachse 6 zentrierende Aufnahme des Adapters 4 an der Adapteraufnahme 13. Die Zentriereinrichtung 32 umfasst einen Außenkonus 33 an der Adapteraufnahme 13 und einen dem Außenkonus 33 zugeordneten Innenkonus 34 am Adapter 4.

Die Bodenplatte 15 der Adapteraufnahme 13 weist an ihrer Oberseite eine ringförmige Auflagefläche 35 auf, die den zentralen Ringabschnitt 16 der Adapteraufnahme 13 umgibt und die zur Auflage der Bajonettzähne 29 des Adapters 4 ausgebildet ist.

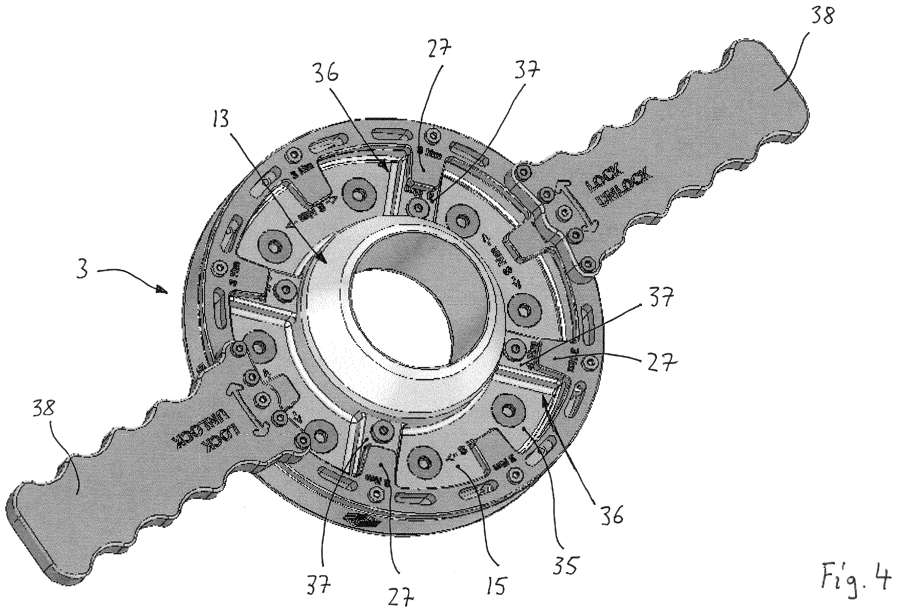

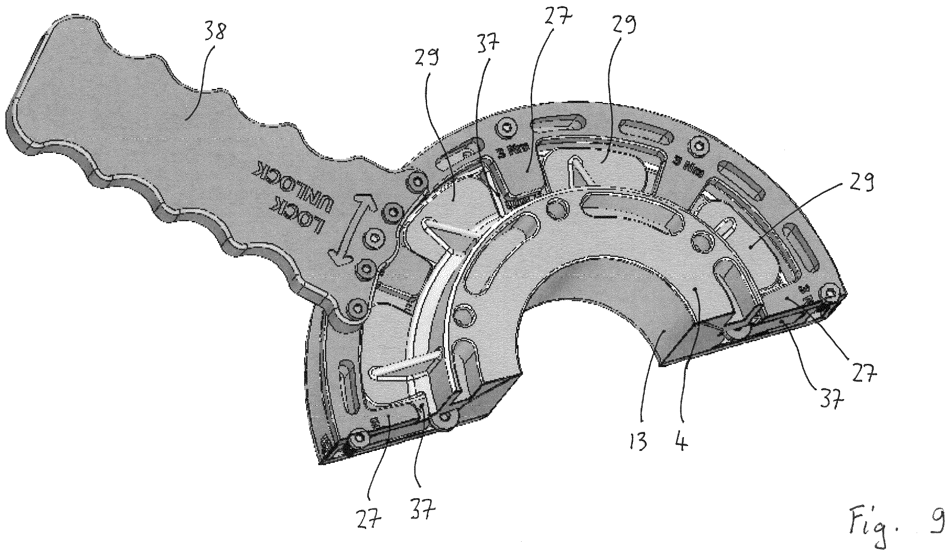

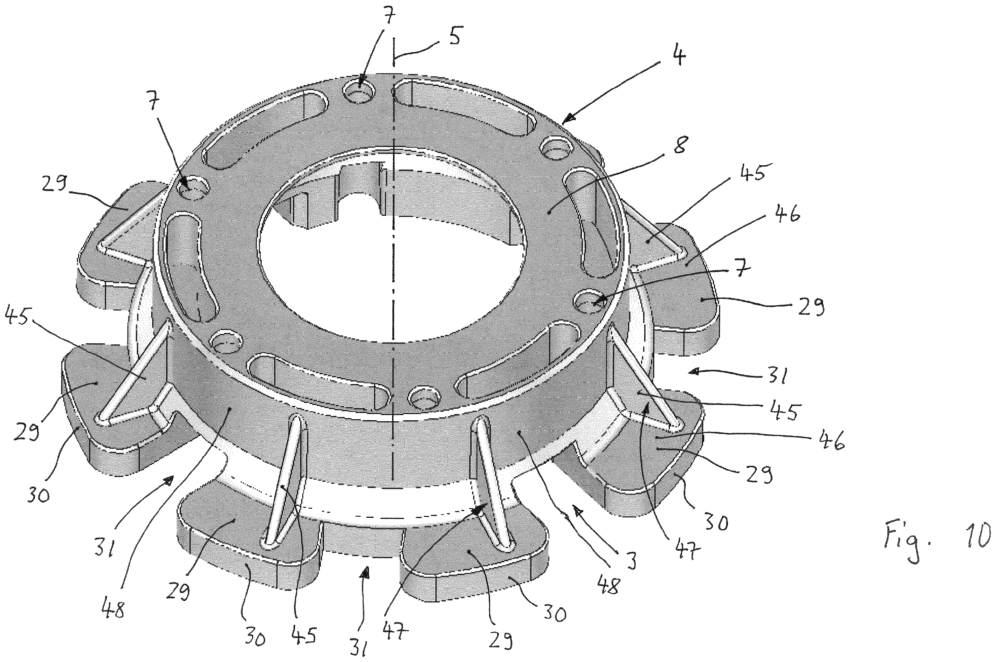

Die Bajonettverschlusseinheit 3 enthält eine Positioniereinrichtung 36, die eine Bewegung des auf die Auflagefläche 35 aufgesetzten Adapters 4 in Umfangsrichtung zumindest begrenzt oder gänzlich verhindert. Die Positioniereinrichtung 36 umfasst beispielsweise zumindest eine Radialrippe 37 (Fig. 4 und 5), die an der Adapteraufnahme 13 auf der Auflagefläche 35 derart angeordnet und gestaltet ist, dass sie in der Aussparung 31 zwischen zwei Bajonettzähnen 29 des aufgesetzten Adapters 4 aufgenommen ist. Die dargestellte Ausführungsform der Schnellverschluss-Befestigungseinrichtung 1 weist beispielhaft vier Radialrippen 37 in Kreuzanordnung auf. Jeweils zwei Bajonettzähne 29 können auf einer Teilauflagefläche der durch die Radialrippen 37 unterteilten Auflagefläche 35 zwischen zwei benachbarten Radialrippen 37 aufgenommen werden (Fig. 9 und 10). Der Adapter 4 kann demnach wahlweise in unterschiedlichen und in Umfangsrichtung versetzt angeordneten Stellungen eingesetzt werden.

Zweckmäßigerweise enthält die Bajonettverschlusseinheit 3 zumindest einen Betätigungshebel oder Schwenkhebel 38 zum Schwenkbetätigen des Verriegelungsrings 18. Der Schwenkhebel 38 ist am Verriegelungsring 18 beispielsweise mittels Verschraubung 39 (Fig. 5) oder mittels einer Steckverbindung (nicht dargestellt) befestigt.

Zweckmäßigerweise enthält die Bajonettverschlusseinheit 3 eine Rasteinrichtung 40, die den Verriegelungsring 18 in einer definierten Schwenkstellung hält, z. B. in einer Offenstellung der Bajonettverschlusseinheit 3, in der der Adapter 4 eingesetzt oder entnommen werden kann. Die Rasteinrichtung 40 umfasst beispielsweise zumindest ein Rastelement 41, das in dem Verriegelungsring 18 z. B. in einer nach unten offenen Bohrung 42 eingesetzt ist und eine federbelastete Rastkugel 43 in eine zugeordnete Rastvertiefung 44 lösbar eindrückt, die in der Oberseite 14 der Basisplatte 10 gebildet ist.

Weiterhin ist eine Einrichtung zum Begrenzen des Schwenkwegs des Verriegelungshebels 18 in seiner Riegelstellung vorgesehen. Hierfür weist der Adapter 4 z. B. zumindest einen radialen Begrenzungssteg 45 auf (Fig. 10), der an einer Oberseite 46 eines der Bajonettzähne 29 angeordnet ist und einen Anschlag 47 für eine zugeordnete Verriegelungsnase 27 in der entsprechenden Schwenkstellung des Verriegelungsrings 18 bildet, wenn die Verriegelungsnasen 27 über die Bajonettzähne 29 verschwenkt sind. Vorzugsweise ist an jedem Bajonettzahn 29 ein solcher Begrenzungssteg 45 angeordnet. Jeder Begrenzungssteg 45 ist zweckmäßigerweise radial innenseitig an einer beispielsweise zylindrischen Umfangswand 48 eines Grundkörpers 49 des Adapters 4 abgestützt oder mit dieser einstückig gefertigt. Der Begrenzungssteg 45 ist vorzugsweise derart gestaltet, dass er den Bajonettzahn 29 bei auftretender Biegebelastung verformungsfest relativ zum Grundkörper 49 abstützt.

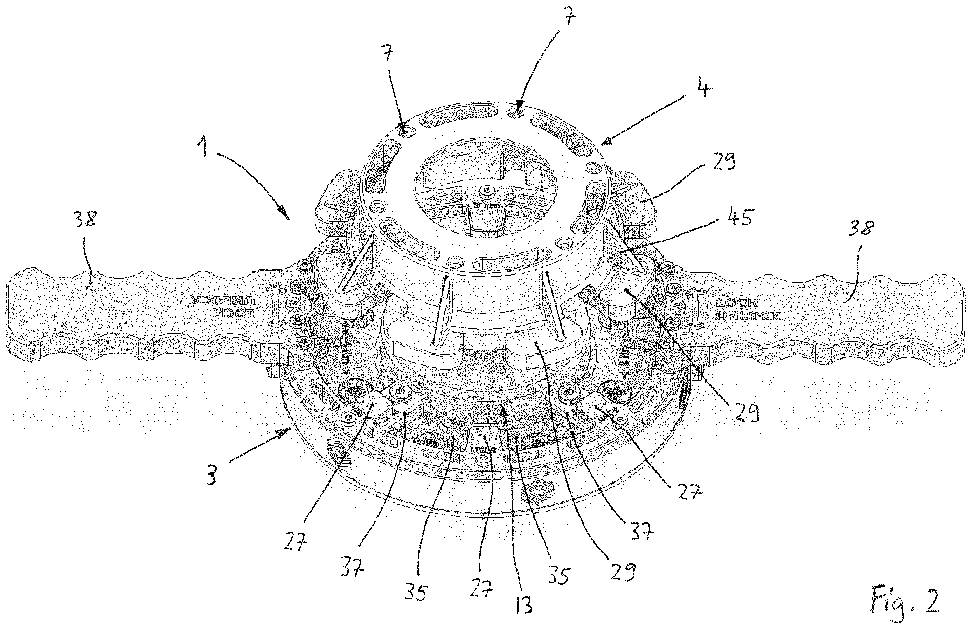

Zum Anbringen eines Gegenstands an dem Roboterfahrzeug 2 mit Hilfe der Schnellverschluss-Befestigungseinrichtung 1 wird der Verriegelungsring 18 der am Roboterfahrzeug 2 angebrachten Bajonettverschlusseinheit 3 aus einer beliebigen Ausgangs-Schwenkstellung in eine Offenstellung oder zweite Schwenkstellung positioniert (Fig. 2), in der die Verriegelungsnasen 27 über den Radialrippen 37 angeordnet sind. Hierfür kann die Rasteinrichtung 40 als Positionierhilfe verwendet werden. Der Adapter 4 wird durch Bewegung des mit ihm verbundenen Gegenstands in axialer Richtung der Schnellverschluss-Drehachse 6 gegen die Adapteraufnahme 13 zugeführt. Die Ausrichtung des Adapters 4 in Umfangsrichtung und die damit einhergehende Zuordnung der Bajonettzähne 29 zur Auflagefläche 35 und zu den Radialrippen 37 sowie den darüber angeordneten Verriegelungsnasen 27 kann wahlweise und unter Berücksichtigung einer gewünschten Drehlagepositionierung des Gegenstands relativ zu einer Außenfläche oder Oberfläche des Roboterfahrzeugs 2 vorgenommen werden. Die Zentriereinrichtung 32 unterstützt das zur Schnellverschluss-Drehachse 6 zentrische Zuführen des Adapters 4 zur Adapteraufnahme 13 und gewährleistet die zentrische Positionierung des Adapters 4. Der dementsprechend an die Adapteraufnahme 13 des Bajonettverschlusses 3 eingesetzte Adapter 4 ist in Fig. 1 dargestellt.

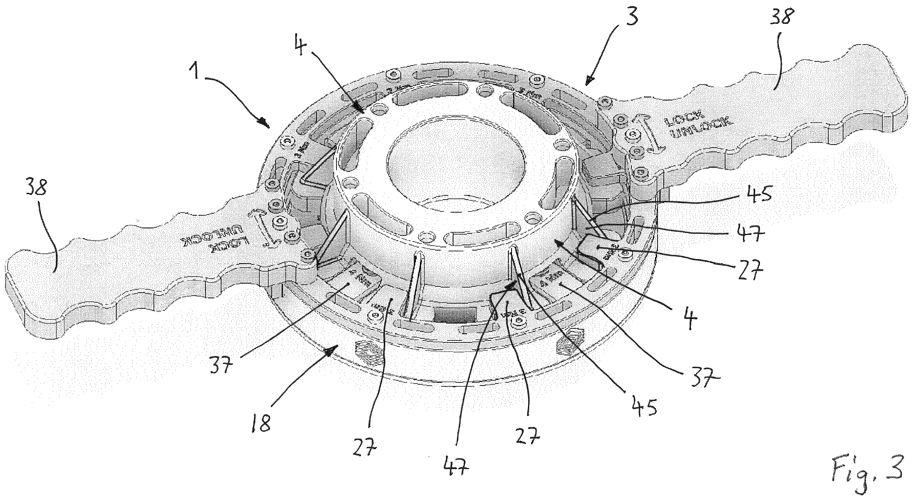

Zum Verriegeln des Adapters 4 wird die Bajonettverschlusseinheit 3 betätigt, indem der Verriegelungsring 18 mittels des Schwenkhebels 38 in seine Riegelstellung oder erste Schwenkstellung verschwenkt wird (von Fig. 1 nach Fig. 3 im Gegenuhrzeigersinn). Dabei bewegen sich die Verriegelungsnasen 27 in Umfangsrichtung über die Bajonettzähne 29 und legen sich mit ihrem seitlichen Rand an dem zugeordneten und den Anschlag 47 bildenden Begrenzungssteg 45 an. Somit ist die erste Schwenkstellung des Verriegelungsrings 18 definiert eingestellt. Beim Verriegeln des Bajonettverschlusses wird somit lediglich der Verriegelungsring 18 verschwenkt. Eine Drehbewegung oder Verschwenkung des Adapters 4 erfolgt nicht. Damit behält der Gegenstand seine Positionierung bei.

### Bezugszeichenliste

| | | | |
|---|---|---|---|
| 1 | Schnellverschluss-Befestigungseinrichtung | 26 | Kopfring |
| | | 27 | Verriegelungsnase |
| 2 | Roboterfahrzeug | 28 | Schraube |
| 3 | Bajonettverschlusseinheit | 29 | Bajonettzahn |
| 4 | Adapter | 30 | Außenumfangsfläche |
| 5 | Zentralachse | 31 | Aussparung |
| 6 | Schnellverschluss-Drehachse | 32 | Zentriereinrichtung |
| 7 | Durchgangsbohrung | 33 | Außenkonus |
| 8 | Stirnbefestigungsfläche | 34 | Innenkonus |
| 9 | Unterseite | 35 | Auflagefläche |
| 10 | Basisplatte | 36 | Positioniereinrichtung |
| 11 | Schrauben | 37 | Radialrippe |
| 12 | Befestigungsstelle | 38 | Schwenkhebel |
| 13 | Adapteraufnahme | 39 | Verschraubung |
| 14 | Oberseite | 40 | Rasteinrichtung |
| 15 | Bodenplatte | 41 | Rastelement |
| 16 | Ringabschnitt | 42 | Bohrung |
| 17 | Öffnung | 43 | Rastkugel |
| 18 | Verriegelungsring | 44 | Rastvertiefung |
| 19 | Basisringabschnitt | 45 | Begrenzungssteg |
| 20 | Lagerschenkel | 46 | Oberseite |
| 21 | Führungsnut | 47 | Anschlag |
| 22 | Umfangsausnehmung | 48 | Umfangswand |
| 23 | Umfangsrand | 49 | Grundkörper |
| 24 | Innenfläche | | |
| 25 | Innenstirnfläche | | |

## Patentansprüche

1. Schnellverschluss-Befestigungseinrichtung (1) zum Anbringen von Gegenständen oder Lasten an einem Roboterfahrzeug (2),
wobei die Schnellverschluss-Befestigungseinrichtung (1) eine Bajonettverschlusseinheit (3) und einen von der Bajonettverschlusseinheit (3) verriegelbaren Adapter (4) enthält, der dafür ausgebildet ist, mit einem Gegenstand verbunden zu werden,
wobei die Bajonettverschlusseinheit (3) enthält
- eine Basisplatte (10), die dafür ausgebildet ist, an dem Roboterfahrzeug (2) befestigt zu werden,
- eine mit der Basisplatte (10) fest verbundene zentrale Adapteraufnahme (13) und
- einen Verriegelungsring (18), der an der Basisplatte (10) um eine zentrale Schnellverschluss-Drehachse (6) verschwenkbar angeordnet ist, die Adapteraufnahme (13) konzentrisch umgibt und einwärts gegen die zentrale Schnellverschluss-Drehachse (6) gerichtete Verriegelungsnasen (27) aufweist, wobei der Verriegelungsring (18) einen Basisringabschnitt (19), der auf der Basisplatte (10) gleitbeweglich aufliegt, und einen die Verriegelungsnasen (27) enthaltenden Kopfring (26) aufweist,
wobei der Basisringabschnitt (19) einen Lagerschenkel (20) aufweist, der einwärts gegen die Schnellverschluss-Drehachse (6) vorsteht und in einer ringförmigen Führungsnut (21) schwenkbeweglich gehalten ist, die unterseitig von der Basisplatte (10) und oberseitig von einer Bodenplatte (15) der Adapteraufnahme (13) begrenzt ist,
wobei der Adapter (4) an seinem Umfang angeordnete Bajonettzähne (29) aufweist, die in einer Ebene senkrecht zur Schnellverschluss-Drehachse (6) angeordnet sind und zur drehfesten Aufnahme des Adapters (4) auf einer zugeordneten insbesondere ringförmigen Auflagefläche (35) der Adapteraufnahme (13) ausgebildet sind,
wobei in einer Schließstellung der Bajonettverschlusseinheit (3) der Verriegelungsring (18) eine erste Schwenkstellung einnimmt, in der die Verriegelungsnasen (27) die Bajonettzähne (29) sperrend überdecken und den Adapter (4) an der Adapteraufnahme (13) verriegelt halten, und in einer Offenstellung der Bajonettverschlusseinheit (3) der Verriegelungsring (18) eine zweite Schwenkstellung einnimmt, in der die Verriegelungsnasen (27) die Bajonettzähne (29) zum Entnehmen des Adapters (4) von der Adapteraufnahme (13) freigeben.

2. Schnellverschluss-Befestigungseinrichtung (1) nach Anspruch 1,
**dadurch gekennzeichnet, dass** die Adapteraufnahme (13) und der Adapter (4) derart gebildet sind, dass der Adapter (4) in Umfangsrichtung wahlweise in unterschiedlichen Stellungen an der Adapteraufnahme (13) einsetzbar ist.

3. Schnellverschluss-Befestigungseinrichtung (1) nach Anspruch 1 oder 2,
**dadurch gekennzeichnet, dass** die Adapteraufnahme (13) zumindest einen Anschlag oder eine Radialrippe (37) aufweist, der bzw. die im Eingriff an zumindest einem Bajonettzahn (29) die Stellung des Adapters (4) in Umfangsrichtung relativ zu der Adapteraufnahme (13) definiert und/oder eine Schwenkbewegung des Adapters (4) relativ zu der Adapteraufnahme (13) begrenzt oder verhindert.

4. Schnellverschluss-Befestigungseinrichtung (1) nach Anspruch 3,
**dadurch gekennzeichnet, dass** die zumindest eine Radialrippe (37) als Erhebung von der ringförmigen Auflagefläche (35) gebildet ist und die Auflagefläche (35) in Umfangsrichtung in Teilauflageflächen unterteilt.

5. Schnellverschluss-Befestigungseinrichtung (1) nach Anspruch 3 oder 4,
**dadurch gekennzeichnet, dass** jeweils zwischen zwei Bajonettzähnen (29) eine Aussparung (31) gebildet ist, in die eine der Radialrippen (37) eingreift.

6. Schnellverschluss-Befestigungseinrichtung (1) nach einem der Ansprüche 3 bis 5,
**dadurch gekennzeichnet, dass** in der zweiten Schwenkstellung oder Offenstellung des Verriegelungsrings (18) die Verriegelungsnasen (27) über den Radialrippen (37) angeordnet sind.

7. Schnellverschluss-Befestigungseinrichtung (1) nach einem der Ansprüche 1 bis 6,
**dadurch gekennzeichnet, dass** der Adapter (4) eine Einrichtung zur Schwenkbegrenzung des Verriegelungshebels (18) in seiner ersten Schwenkstellung oder Riegelstellung aufweist.

8. Schnellverschluss-Befestigungseinrichtung (1) nach Anspruch 7,
**dadurch gekennzeichnet, dass** die Einrichtung zur Schwenkbegrenzung zumindest einen radialen Begrenzungssteg (45) aufweist, der an einer Oberseite (46) eines der Bajonettzähne (29) angeordnet ist und einen Anschlag (47) für eine zugeordnete Verriegelungsnase (27) in der ersten Schwenkstellung des Verriegelungsrings (18) bildet.

9. Schnellverschluss-Befestigungseinrichtung (1) nach einem der Ansprüche 1 bis 8,
**dadurch gekennzeichnet, dass** eine Zentriereinrichtung (32) für eine zentrierende Aufnahme des Adapters (4) an der Adapteraufnahme (13) vorgesehen ist und einen Außenkonus (33) an der Adapteraufnahme (13) und einen dem Außenkonus (33) zugeordneten Innenkonus (34) am Adapter (4) aufweist.

10. Schnellverschluss-Befestigungseinrichtung (1) nach einem der Ansprüche 1 bis 9,
**dadurch gekennzeichnet, dass** zumindest ein Schwenkhebel (38) zum Schwenkbetätigen des Verriegelungsrings (18) am Verriegelungsring (18) mittels Verschraubung (39) oder mittels einer Steckverbindung befestigt ist.

11. Roboterfahrzeug (2) mit zumindest einer Schnellverschluss-Befestigungseinrichtung (1) nach einem der Ansprüche 1 bis 10 zum Anbringen von Gegenständen oder Lasten an dem Roboterfahrzeug (2).

12. Roboterfahrzeug (2) nach Anspruch 11,
**dadurch gekennzeichnet, dass** die zumindest eine Schnellverschluss-Befestigungseinrichtung (1) an einer Außenseite oder einer Oberseite des Roboterfahrzeugs (2) angeordnet ist.

13. Roboterfahrzeug (2) nach Anspruch 11 oder 12,
**dadurch gekennzeichnet, dass** die zumindest eine Schnellverschluss-Befestigungseinrichtung (1) zum Anbringen von Gegenständen oder Lasten wie Antennen, Radareinrichtungen, Lasereinrichtungen und Trageinrichtungen für Ausrüstung oder für Personen ausgebildet ist.

## Claims

1. Quick-release fastener (1) for attaching objects or loads to a robotic vehicle (2),
wherein the quick-release fastener (1) contains a bayonet closure unit (3) and an adapter (4) lockable by the bayonet closure unit (3), which is designed to be connected to an object, wherein the bayonet closure unit (3) contains
- a base plate (10) designed to be attached to the robotic vehicle (2),
- a central adapter receptacle (13) fixedly connected to the base plate (10), and
- a locking ring (18), which is arranged on the base plate (10) so as to be pivotable about a central quick-release axis of rotation (6), concentrically surrounds the adapter receptacle (13) and has locking lugs (27) directed inwards towards the central quick-release axis of rotation (6), wherein the locking ring (18) has a base ring section (19), which rests slidably on the base plate (10), and a head ring (26) containing the locking lugs (27),
wherein the base ring section (19) has a bearing limb (20), which projects inwards towards the quick-release axis of rotation (6) and is held pivotably in an annular guide groove (21), which is delimited on the underside by the base plate (10) and on the top by a base plate (15) of the adapter receptacle (13),
wherein the adapter (4) has bayonet teeth (29) arranged on its circumference, which are arranged in a plane perpendicular to the quick-release axis of rotation (6) and are designed to receive the adapter (4) in a rotationally fixed manner on an associated, in particular annular, support surface (35) of the adapter receptacle (13),
wherein in a closed position of the bayonet closure unit (3), the locking ring (18) assumes a first pivot position, in which the locking lugs (27) cover the bayonet teeth (29) in a blocking manner and keep the adapter (4) locked on the adapter receptacle (13), and in an open position of the bayonet closure unit (3), the locking ring (18) assumes a second pivot position, in which the locking lugs (27) release the bayonet teeth (29) from the adapter receptacle (13) in order to remove the adapter (4).

2. Quick-release fastener (1) according to claim 1,
**characterised in that** the adapter receptacle (13) and the adapter (4) are formed in such a way that the adapter (4) can optionally be inserted in different positions on the adapter receptacle (13) in the circumferential direction.

3. Quick-release fastener (1) according to claim 1 or 2,
**characterised in that** the adapter receptacle (13) has at least one stop or a radial rib (37) which, when engaged on at least one bayonet tooth (29), defines the position of the adapter (4) in the circumferential direction relative to the adapter receptacle (13) and/or limits or prevents a pivoting movement of the adapter (4) relative to the adapter receptacle (13).

4. Quick-release fastener (1) according to claim 3,
**characterised in that** the at least one radial rib (37) is formed as an elevation from the annular support surface (35) and divides the support surface (35) in the circumferential direction into partial support surfaces.

5. Quick-release fastener (1) according to claim 3 or 4,
**characterised in that** a recess (31) into which one of the radial ribs (37) engages is formed in each case between two bayonet teeth (29).

6. Quick-release fastener (1) according to any of claims 3 to 5,
**characterised in that**, in the second pivot position or open position of the locking ring (18), the locking lugs (27) are arranged above the radial ribs (37).

7. Quick-release fastener (1) according to any of claims 1 to 6,
**characterised in that** the adapter (4) has a device for limiting the pivoting of the locking lever (18) in its first pivot position or locking position.

8. Quick-release fastener (1) according to claim 7,
**characterised in that** the device for limiting the pivoting has at least one radial delimiting web (45) which is arranged on an upper side (46) of one of the bayonet teeth (29) and forms a stop (47) for an associated locking lug (27) in the first pivot position of the locking ring (18).

9. Quick-release fastener (1) according to any of claims 1 to 8,
**characterised in that** a centring device (32) is provided for centring the adapter (4) on the adapter receptacle (13) and has an outer cone (33) on the adapter receptacle (13) and an inner cone (34) on the adapter (4) associated with the outer cone (33).

10. Quick-release fastener (1) according to any of claims 1 to 9,
**characterised in that** at least one pivot lever (38) for pivoting the locking ring (18) is attached to the locking ring (18) by means of a screw connection (39) or by means of a plug-in connection.

11. Robotic vehicle (2) with at least one quick-release fastener (1) according to any of claims 1 to 10 for attaching objects or loads to the robotic vehicle (2).

12. Robotic vehicle (2) according to claim 11,
**characterised in that** the at least one quick-release fastener (1) is arranged on an outer side or an upper side of the robotic vehicle (2).

13. Robotic vehicle (2) according to claim 11 or 12,
**characterised in that** the at least one quick-release fastener (1) is designed for attaching objects or loads such as antennas, radar devices, laser devices and carrying devices for equipment or for persons.

## Revendications

1. Dispositif de fixation à action rapide (1) pour la fixation d'objets ou de charges à un véhicule robotisé (2),
le dispositif de fixation à action rapide (1) comprenant une unité de fermeture à baïonnette (3) et un adaptateur (4) pouvant être verrouillé par l'unité de fermeture à baïonnette (3), qui est conçu pour être relié à un objet,
l'unité de fermeture à baïonnette (3) comprenant
- une plaque de base (10) conçue pour être fixée au véhicule robotisé (2),
- un logement d'adaptateur central (13) relié de manière fixe à la plaque de base (10) et
- une bague de verrouillage (18), qui est disposée sur la plaque de base (10) de manière à pouvoir pivoter autour d'un axe de rotation (6) central du dispositif à action rapide, entoure de manière concentrique le logement d'adaptateur (13) et présente des ergots de verrouillage (27) dirigés vers l'intérieur par rapport à l'axe de rotation (6) central du dispositif à action rapide, ladite bague de verrouillage (18) présentant une section de bague de base (19) qui repose de manière à pouvoir coulisser sur la plaque de base (10) et une bague de tête (26) comprenant les ergots de verrouillage (27),
ladite section de bague de base (19) présentant une branche de palier (20) qui fait saillie vers l'intérieur par rapport à l'axe de rotation (6) du dispositif à action rapide et est maintenue de manière à pouvoir pivoter dans une rainure de guidage annulaire (21), qui est délimitée côté inférieur par la plaque de base (10) et côté supérieur par une plaque de fond (15) du logement d'adaptateur (13),
dans lequel l'adaptateur (4) présente des dents de baïonnette (29) disposées sur sa circonférence, qui sont disposées dans un plan perpendiculaire à l'axe de rotation (6) du dispositif à action rapide et sont conçues pour recevoir l'adaptateur (4) de manière solidaire en rotation sur une surface d'appui associée (35), en particulier annulaire, du logement d'adaptateur (13),
dans lequel, dans une position fermée de l'unité de fermeture à baïonnette (3), la bague de verrouillage (18) occupe une première position de pivotement, dans laquelle les ergots de verrouillage (27) recouvrent les dents de baïonnette (29) de manière bloquante et maintiennent l'adaptateur (4) verrouillé sur le logement d'adaptateur (13) et, dans une position ouverte de l'unité de fermeture à baïonnette (3), la bague de verrouillage (18) occupe une seconde position de pivotement, dans laquelle les ergots de verrouillage (27) libèrent les dents de baïonnette (29) pour le retrait de l'adaptateur (4) du logement d'adaptateur (13).

2. Dispositif de fixation à action rapide (1) selon la revendication 1,
**caractérisé en ce que** le logement d'adaptateur (13) et l'adaptateur (4) sont formés de sorte que l'adaptateur (4) peut être placé sur le logement d'adaptateur (13) au choix dans différentes positions dans la direction circonférentielle.

3. Dispositif de fixation à action rapide (1) selon l'une des revendications 1 ou 2,
**caractérisé en ce que** le logement d'adaptateur (13) présente au moins une butée ou une nervure radiale (37) qui, lorsqu'elle est en prise avec au moins une dent de baïonnette (29), définit la position de l'adaptateur (4) dans la direction circonférentielle par rapport au logement d'adaptateur (13) et/ou limite ou empêche un mouvement de pivotement de l'adaptateur (4) par rapport au logement d'adaptateur (13).

4. Dispositif de fixation à action rapide (1) selon la revendication 3,
**caractérisé en ce que** l'au moins une nervure radiale (37) est formée en tant que saillie de la surface d'appui annulaire (35) et divise la surface d'appui (35) en surfaces d'appui partielles dans la direction circonférentielle.

5. Dispositif de fixation à action rapide (1) selon l'une des revendications 3 ou 4,
**caractérisé en ce qu'**un évidement (31) est formé respectivement entre deux dents de baïonnette (29), dans lequel s'engage l'une des nervures radiales (37).

6. Dispositif de fixation à action rapide (1) selon l'une quelconque des revendications 3 à 5,
**caractérisé en ce que**, dans la seconde position de pivotement ou position ouverte de la bague de verrouillage (18), les ergots de verrouillage (27) sont disposés au-dessus des nervures radiales (37).

7. Dispositif de fixation à action rapide (1) selon l'une quelconque des revendications 1 à 6,
**caractérisé en ce que** l'adaptateur (4) comporte un dispositif de limitation du pivotement de la bague de verrouillage (18) dans sa première position de pivotement ou position de verrouillage.

8. Dispositif de fixation à action rapide (1) selon la revendication 7,
**caractérisé en ce que** le dispositif de limitation du pivotement présente au moins une nervure de limitation radiale (45), qui est disposée sur une face supérieure (46) de l'une des dents de baïonnette (29) et forme une butée (47) pour un ergot de verrouillage associé (27) dans la première position de pivotement de la bague de verrouillage (18).

9. Dispositif de fixation à action rapide (1) selon l'une quelconque des revendications 1 à 8,
**caractérisé en ce qu'**un dispositif de centrage (32) est prévu pour la réception de l'adaptateur (4) de manière centrée sur le logement d'adaptateur (13) et comporte un cône extérieur (33) sur le logement d'adaptateur (13) et un cône intérieur (34) associé au cône extérieur (33) sur l'adaptateur (4).

10. Dispositif de fixation à action rapide (1) selon l'une quelconque des revendications 1 à 9,
**caractérisé en ce qu'**au moins un levier pivotant (38) pour l'actionnement en pivotement de la bague de verrouillage (18) est fixé à la bague de verrouillage (18) au moyen d'un vissage (39) ou au moyen d'une liaison enfichable.

11. Véhicule robotisé (2) avec au moins un dispositif de fixation à action rapide (1) selon l'une quelconque des revendications 1 à 10 pour la fixation d'objets ou de charges au véhicule robotisé (2).

12. Véhicule robotisé (2) selon la revendication 11,
**caractérisé en ce que** l'au moins un dispositif de fixation à action rapide (1) est disposé sur une face extérieure ou une face supérieure du véhicule robotisé (2).

13. Véhicule robotisé (2) selon l'une des revendications 11 ou 12,
**caractérisé en ce que** l'au moins un dispositif de fixation à action rapide (1) est conçu pour la fixation d'objets ou de charges tels que des antennes, des dispositifs radar, des dispositifs laser et des dispositifs de support pour équipement ou pour personnes.
